# EUROPEAN PATENT APPLICATION

(11) **EP 3 043 241 A1**
(43) Date of publication of application: **13.07.2016**
(21) Application number: 16150321.4
(22) Date of filing: 06.01.2016
(51) Int. Cl.: G06F 3/0354

(54) **USER INTERACTION DEVICE**

(30) Priority: 07.01.2015 GB 201500197
(71) Applicant: Promethean Ltd, Blackburn, Lancashire BB1 5TH (GB)
(72) Inventor: Martindale, Melanie, Newton-le-Willows, Merseyside WA12 9QB (GB)
(74) Representative: Harrison IP Limited

(57) **Abstract**

A user interaction device, in particular an electronic pen, is disclosed which comprises an elongate outer casing (112) having an axis, a chassis (114) located within the outer casing, a switch having electrical contacts (130) supported by the chassis, and a nib (116) movable relative to the chassis (114) and serving to close the switch when axially displaced towards the chassis (114). In the invention, the nib (116) is attached to the chassis (114) by means of an axially compressible resilient element (144) of which a first end (142) is anchored to the chassis (114) and a second end (146) is anchored to the nib (116), and movement of the nib (116) in a direction transverse to the axis of the outer casing (112) is constrained by the resilient element (144).

## Description

### Field of the Invention

The invention relates to a user interaction device, particularly an electronic pen, for use with an interactive whiteboard or with a touch screen.

### Background to the Invention

Some interactive whiteboards and touch screens require an electronic pen to act as a pointer, the pen serving a function analogous to that of a computer mouse. The pen may have an elongate body carrying one or more buttons for actuation by the user, equivalent to the buttons on a mouse. In the case of pens for some whiteboards, they may additionally comprise an LED located near the "nib", i.e. the tip of the pen that contacts the whiteboard, and the nib may itself be translucent and incorporate a photo sensitive diode.

Such electronic pens, and similar user interactive devices, traditionally have a switch that is closed by depression of the nib. Normally, the switch mechanism employs several plastics material parts that connect together to translate linear force acting on the nib into displacement of a part of the switch mechanism to establish an electrical connection between two switch contacts. The nib is normally biased by a spring or other resilient element towards a position in which the switch is open.

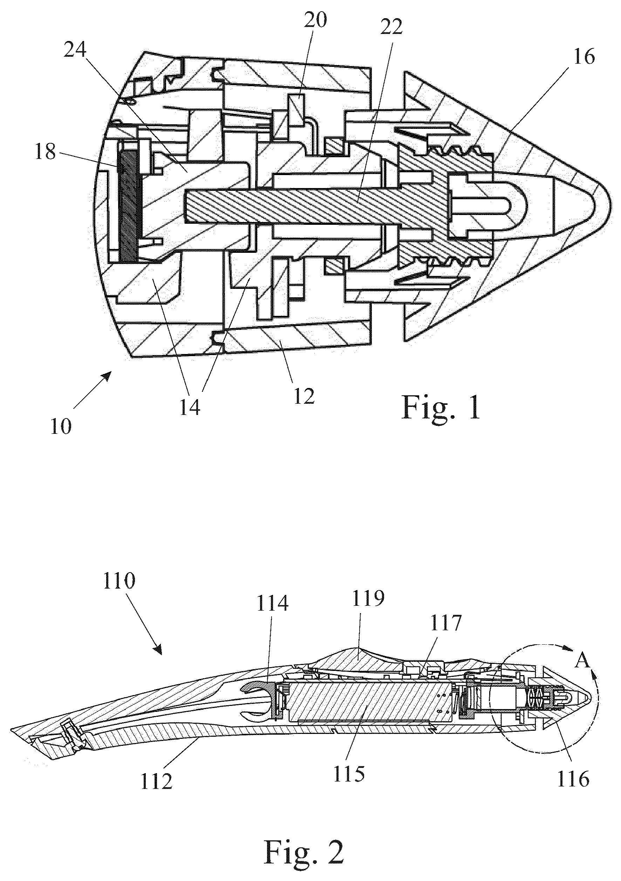

A section through the tip of a known electronic pen is shown in Figure 1. The pen 10 comprises an elongate outer casing 12 within which there is located a chassis 14 that supports the various stationary internal components of the electronic pen 10. These components include a circuit board 18 that carries switch contacts and an LED 20. To close the switch contacts on the circuit board 18, the pen has a nib 16 that is screwed onto the threaded proximal end of a push rod 22. The push rod 22 passes through and is guided by a hole in the chassis 14 and its distal end is engaged within a rubber or elastomeric element 24 that acts as the switch actuator. When the nib 16 is depressed, the push rod 22 deforms the element 24 to cause a conductor carried by the element 24 to bridge across the stationary contacts on the circuit board 18 and thereby close the switch. Closing of the switch serves to indicate that the nib 16 of the pen 10 has contacted the whiteboard.

In the arrangement shown in Figure 1, several parts are involved in operating the switch, including the nib 16, the push rod 2, the rubber element 24 and the circuit board 18. 20. Linear movement is relied upon for all of the parts to move in perfect alignment in order for the switch to be actuated reliably. However, a disadvantage of such an arrangement is that the parts may stick or become misaligned, which causes the switch to remain activated for longer than necessary or to be unresponsive. Additionally, due to the tolerances there is movement in each part, which causes gapping because the rubber element 24 and the circuit board 18 resulting in the switch becoming inoperative.

### Summary of the Invention

With a view to mitigating the foregoing disadvantages, the present invention provides a user interaction device comprising an elongate outer casing having an axis, a chassis located within the outer casing, a switch having electrical contacts supported by the chassis, and a nib movable relative to the chassis and serving to close the switch when axially displaced towards the chassis, wherein the nib is attached to the chassis by means of an axially compressible resilient element of which a first end is anchored to the chassis and a second end is anchored to the nib, and wherein movement of the nib in a direction transverse to the axis of the outer casing is constrained by the resilient element.

In the invention, the nib need not be, and preferably is not, guided by any element that passes through a hole in the outer casing or the chassis. Instead, it is constrained to move generally axially, preferably solely, by the resilient element that biases the nib into the open position of the switch and that also serves to prevent the nib from separating from the chassis. This construction avoids the risk of the nib, or any part attached to it, becoming jammed against a surface intended to guide and constrain its axial movement.

It is advantageous for the resilient element to be of a design that tends to centre the nib on the axis of the casing as the nib is depressed. A single helical spring does not fulfil this criterion as it tends to buckle while it is being compressed.

Most preferably, the resilient element may be constructed as a wave spring. Alternative suitable resilient elements may be formed by resilient bellows or concentric oppositely-handed helical springs.

Conveniently, the end of the resilient element may be integrally formed with a screw thread to engage with a mating thread in the nib in order to anchor the nib to the resilient element and allow removal of the nib.

In the case of an electronic pen requiring a photodiode within the nib, the photodiode may be mounted on the second end of the resilient element and connected to a circuit board supported on the chassis by means of a conductor passing axially through the resilient element.

To enable the nib to close the electrical switch, it is convenient to provide a conductor on the axial end of the nib facing the chassis, to bridge across the electrical contacts supported by the chassis.

By locating one of the electrical contacts on the nib, the pen can be rendered more responsive because pressure on the nib results in direct closing of the switch.

### Brief Description of the Drawings

The invention will now be described further, by way of example, with reference to the accompanying drawings, in which:
Figure 1 is, as earlier described, a sectional view of a prior art arrangement of the nib of an interactive electronic pen;
Figure 2 is a diagram showing a sectional view of an electronic pen in accordance with the present invention;
Figure 3 is a view of the front section A of Figure 2 drawn to an enlarged scale; and
Figure 4 is a perspective view of the front section of the electronic pen of Figure 2 with the nib removed.

### Detailed Description of an Embodiment

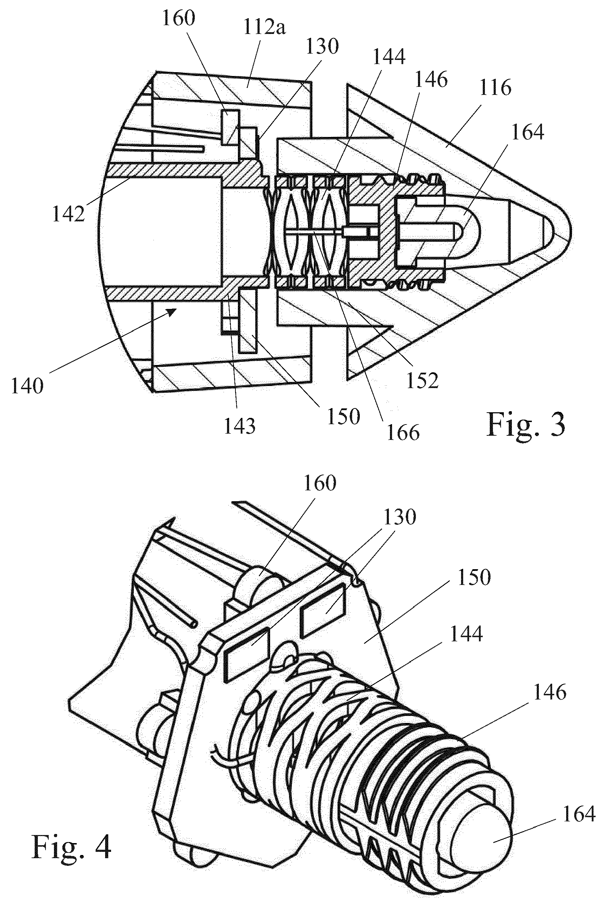

Figure 2 shows an interactive whiteboard electronic pen 110 having an elongate outer casing 112, a chassis 114 supporting, *inter alia,* a battery cell 115, a printed circuit board 117 and one or more buttons 119. An axially depressable nib 116 is provided at the front section "A" of the pen, which is shown in more detail in Figures 3 and 4.

Figures 3 and 4 show a plastics or metallic element, generally designated 140 that forms part of, or is securely anchored to, the chassis 114. The element 140 comprises three sections forming a single integral component.

A first, cylindrical, section 142 of the element 140 is connected to, or forms part of the chassis 114. The section 142 terminates in a shoulder 143 that serves as an abutment for locating a small circuit board 150 carrying a pair of contacts 130 that face towards the nib 116.

The second section 144, contiguous with the first section 142, serves as an axially compressible resilient element and is constructed as a wave spring, as can best be seen in Figure 4. The spring may alternatively be formed as a compressible resilient bellows.

The third section 146 is externally threaded and engages with a mating thread formed within the end of a cylindrical inner sleeve 152 of the nib 116. The sleeve 152 is designed to fit around the wave spring 144 with clearance.

The circuit board 150 also carries an LED 160 that is visible through a translucent section 112a of the outer casing and the element 140 also has a photodiode 164 mounted in its end which can respond to light passing through the nib 116. The LED 160 and the photodiode 164 are connected to the circuit board 117. A conductor 166 leading to the photodiode passes through the wave spring 144, as shown in Figures 3 and 4. The functions of the LED 160 and the photodiode 164 are known in the art and they need not be described in the present context.

When the nib 116, which is itself made of a translucent material, is screwed directly onto the section 146 of the element 140, its inner sleeve 152 surrounds and protects the wave spring 144. The limited clearance between the two permits free axial movement of the nib 116 but only a limited degree of tilting away from the central axis of the tip of the pen. The design of the wave spring and its interaction with the sleeve 152 thus tend to centre the nib on the axis of the casing as the nib is depressed.

The axial end surface of the sleeve 152 facing the contacts 130 carries a conductor that can bridge across the contacts 130 to allow current to flow between them when the nib is depressed against the action of the wave spring 144.

In a rest position of the nib 116, with no deformation of the wave spring 144, the conductor carried by the nib 116 is held away from the switch contacts 130 to maintain the switch open. However, the mounting of the nib 116 directly on the element 140 allows all the parts of the switch to be held securely in close proximity to one another, so as to improve the sensitivity of the switch.

During use of the electronic pen 30, a user may press the nib 116 against the surface of an interactive whiteboard. Upon doing so, the elastically deformable wave spring 144 is compressed. Upon the nib 42 being depressed from its resting state, the conductor carried by the axial end surface of the sleeve 152 of the nib 116 is brought into contact with contacts 130 on the circuit board 150, thus completing a circuit within the pen. This connection indicates that the pen is being used and allows optics and an infrared system of the interactive whiteboard to recognise the pen, track it and show it as a pen, thereby displaying the strokes and movements undertaken by the user.

The electronic pen of the present invention reduces the number of components required in the construction of the pen and provides a more reliable and responsive pen. The reduction in the number of components results in a more easily assembled pen that can be manufactured at a lower cost. Additionally, the use of a wave spring increases the responsiveness of the pen.

## Claims

1. A user interaction device comprising an elongate outer casing (112) having an axis,
a chassis (114) located within the outer casing,
a switch having electrical contacts (130) supported by the chassis, and
a nib (116) movable relative to the chassis (114) and serving to close the switch when axially displaced towards the chassis (114),
**characterised in that**
the nib (116) is attached to the chassis (114) by means of an axially compressible resilient element (144) of which a first end (142) is anchored to the chassis (114) and a second end (146) is anchored to the nib (116), and
movement of the nib (116) in a direction transverse to the axis of the outer casing (112) is constrained solely by the resilient element (144).

2. A device as claimed in claim 1, wherein the resilient element (144) is constructed as a wave spring.

3. A device as claimed in claim 1, wherein the resilient element is constructed as a resilient bellows.

4. A device as claimed in any preceding claim,
wherein the end of the resilient element (144) is integrally formed with a screw thread (146) to engage with a mating thread in the nib (116) in order to anchor the nib (116) to the resilient element (144).

5. A device as claimed in any preceding claim,
wherein the resilient element (144) is formed as an integral part of an element (140) forming part of the chassis (114).

6. A device as claimed in any preceding claim,
wherein a photodiode (164) is mounted on the second end of the resilient element (144) and connected to a circuit board (117) supported on the chassis (114) by means of a conductor (166) passing axially through the resilient element (144).

7. A device as claimed in any preceding claim,
wherein a conductor is provided on an axial end surface of the nib (116) facing the chassis (114) to bridge across the electrical contacts (130) supported by the chassis.
